(19) **Europäisches Patentamt / European Patent Office / Office européen des brevets**

(11) **EP 4 778 604 A1**

(12) # EUROPEAN PATENT APPLICATION

(43) Date of publication:
22.07.2026 Bulletin 2026/30

(21) Application number: 25305067.8

(22) Date of filing: 20.01.2025

(51) International Patent Classification (IPC):
*A63F 13/285* (2014.01)    *G06F 3/01* (2006.01)

(52) Cooperative Patent Classification (CPC):
**A63F 13/285; A63F 13/25; G06F 3/011; G06F 3/016**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- InterDigital CE Patent Holdings, SAS
  75017 Paris (FR)
- INRIA - Institut National de Recherche en Informatique et en Automatique
  78150 Le Chesnay (FR)

(72) Inventors:
- **GALVANE, Quentin**
  **35235 THORIGNE-FOUILLARD (FR)**
- **ROY, Tom**
  **35510 CESSON-SEVIGNE (FR)**
- **LECUYER, Gurvan**
  **35000 RENNES (FR)**

(74) Representative: **Interdigital**
**Immeuble ZEN 2**
**845 A, avenue des Champs Blancs**
**35510 Cesson-Sévigné (FR)**

(54) **METHOD AND APPARATUS FOR HAPTIC SPATIALIZATION**

(57)    A system for haptic spatialization introduces the notion of a haptic source, haptic object and haptic listener. A haptic source is a virtual transmitter that is able to provide haptic information. A haptic object is an object with haptic properties based on physical characteristics, to modulate the propagation of a haptic signal through the object. A haptic listener is a virtual sensor that captures haptic information. A haptic engine handles the workflow and interactions between these different elements of the system. More particularly, it determines how a haptic signal is propagated according to the spatial localization and the properties of the elements. Syntax elements describing the elements composing such system allow to create information representative of a scene comprising spatialized haptic effects. Such information can be provided to a rendering device in order to be played back accordingly.

Figure 4

EP 4 778 604 A1

**Description**

TECHNICAL FIELD

At least one of the present embodiments generally relates to content representation and more particularly to a system allowing to handle spatialized haptic effects.

BACKGROUND

Haptics refers to sense of touch and includes two dimensions, tactile and kinesthetic. The first relates to tactile sensations such as friction, roughness, hardness, temperature and is felt through the mechanoreceptors of the skin (Merkel cell, Ruffini ending, Meissner corpuscle, Pacinian corpuscle). The second is linked to the sensation of force/-torque, position, motion/velocity provided by the muscles, tendons and the mechanoreceptors in the joints.

Haptic can be experienced in movie theaters through 4DX movie. Haptic is an additional track played along with video and audio to augment movie experiences. Haptic is also commonly used in interactive experiences, such as video games or virtual reality (VR) experiences, to enhance the immersion feeling. Providing haptic feedback when interacting with virtual object provides a natural feeling that adds a new layer of realism in the experience.

For interactive experiences in virtual environments, the use of haptic is becoming more and more popular but the integration of this new media remains limited. Most of the videogames and VR experiences are created using game engines such as Unity, or Unreal Engine. Over the past years, those game engines have made tremendous progress on various aspects (image quality, sound, scene complexity...) but they only provide yet very basic support for haptic. For example, only the most common game controller is supported natively by the mainstream game engine, providing simple haptic capabilities limited to vibration in the hand.

Haptic is gaining growing popularity with the release of numerous mass market haptic devices. This broadening range of consumer haptic devices comes with the need for better integration of haptic capabilities in game engine to better support the creation of immersive content. One of the big challenges that could leverage haptic capabilities is the support of haptic spatialization in applications.

SUMMARY

A first aspect of at least one embodiment is directed to a method comprising obtaining haptic elements associated to a content, the haptic elements comprising at least one haptic source, at least one haptic object, and at least one haptic listener, for a haptic listener, selecting a set of haptic objects that allows to establish a link between the at least one haptic source and the haptic listener, determining a haptic effect resulting of propagation of the at least one haptic source to the haptic listener through the selected set of haptic objects and providing the haptic effect to a haptic rendering engine, wherein the haptic elements are associated with a spatial localization within a scene.

A second aspect of at least one embodiment is directed to an apparatus comprising a processor configured to obtain haptic elements associated to a content, the haptic elements comprising at least one haptic source, at least one haptic object, and at least one haptic listener, for a haptic listener, select a set of haptic objects that allows to establish a link between the at least one haptic source and the haptic listener, determine a haptic effect resulting of propagation of the at least one haptic source to the haptic listener through the selected set of haptic objects and provide the haptic effect to a haptic rendering engine, wherein the haptic elements are associated with a spatial localization within a scene.

A third aspect of at least one embodiment is directed to a computer program comprising program code instructions executable by a processor, the computer program implementing at least the steps of a method according to the first aspect.

A fourth aspect of at least one embodiment is directed to a computer program product stored on a non-transitory computer readable medium and comprising program code instructions executable by a processor, the computer program product implementing at least the steps of a method according to the first aspect.

A fifth aspect of at least one embodiment is directed to a non-transitory computer readable medium comprising data elements for describing at least one haptic scene, the data elements comprising at least one haptic source, at least one haptic object, and at least one haptic listener, wherein a haptic source generates a haptic signal, a haptic listener captures the haptic signal as propagated from the haptic source through at least one haptic object and wherein haptic sources, haptic objects, haptic listeners are associated with spatial localizations within the haptic scene.

BRIEF DESCRIPTION OF THE DRAWINGS

The present disclosure may be better understood by consideration of the detailed description below in conjunction with the accompanying figures in which:

Figure 1 illustrates a block diagram of an example of system in which various aspects and embodiments are implemented.

Figure 2 illustrates an example of spatialized audio workflow representing two audio sources and the audio listener.

Figure 3 provides a simplified example of a glTF scene combining the interactivity and haptics extensions.

Figure 4 illustrates an example of propagation of a haptic signal using the system for haptic spatialization according to embodiments.

Figure 5 illustrates an example of a haptic spatialization gltf scene according to embodiments.

Figure 6 illustrates an example of haptic spatialization gltf scene representing a car simulation experience according to embodiments.

Figure 7 illustrates an example of pipeline for rendering the haptic spatialization gltf scene representing a car simulation experience according to embodiments.

Figure 8 illustrates an example of method for decoding information representative of spatialized haptic effects according to embodiments.

Figure 9A illustrates an example of haptic spatialization gltf scene representing a virtual meeting experience according to embodiments.

Figure 9B illustrates an example of syntax of the haptic spatialization gltf scene of figure 9A according to embodiments.

Figure 9C illustrates an example of pipeline for rendering the haptic spatialization gltf scene of figure 9A according to embodiments.

It should be understood that the drawings are for purposes of illustrating examples of various aspects, features and embodiments in accordance with the present disclosure and are not necessarily the only possible configurations.

DETAILED DESCRIPTION

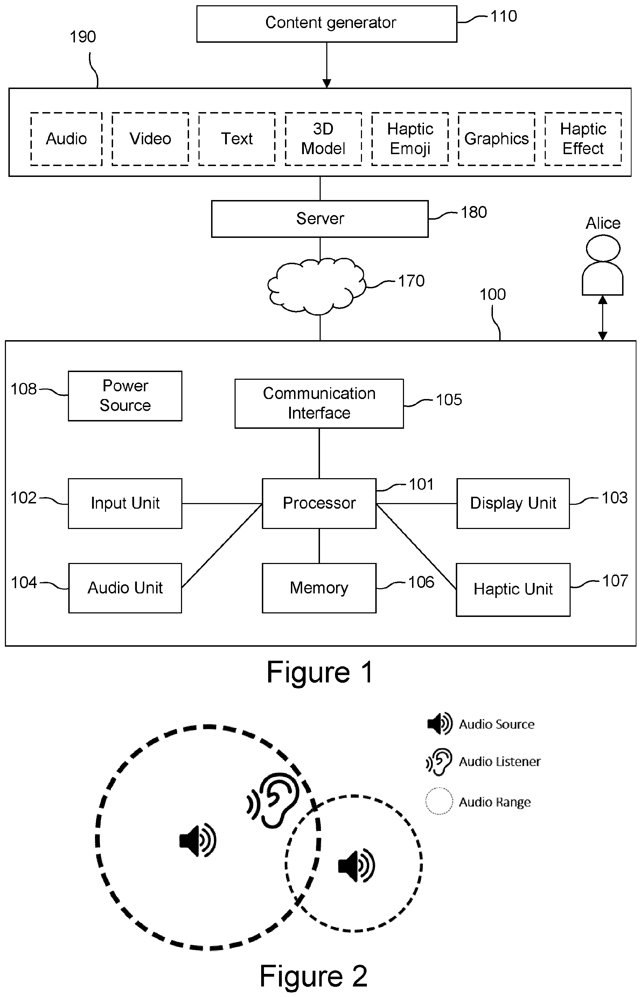

**Figure** 1 illustrates a block diagram of an example of system in which various aspects and embodiments are implemented. In the depicted system, the user Alice uses the rendering device 100 to interact with a server 180 providing a content 190 through a communication network 170. This content 190 may take many different forms and may comprise various data and/or files such as audio data, video data, text, graphics required for its rendering. It may comprise haptic effects, and more particularly information related to the spatialization and propagation of haptic effects. The content 190 may be generated under control of a content generator 110 that may take different forms according to different context of usage. For example, when the content is a written document, the content generator may be implemented for example as an edition software running on a computer or server. When the content is a flow of interpersonal interactions (E.g., SMS) or social media interactions (E.g., WhatsApp, Twitter), the content generator may be implemented for example as an interaction manager software running on a computer.

The rendering device 100 is an apparatus that comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as haptic signal decoding, input/ output processing, and/or any other functionality that enables the device to operate in an immersive system.

The processor 101 may be coupled to an input unit 102 configured to convey user interactions. Multiple types of inputs and modalities can be used for that purpose. A physical keypad and a touch sensitive surface are typical examples of input units adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation. The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example. The processor 101 may be coupled to a communication interface 105 configured to exchange data with external devices. The communication preferably uses a wireless communication standard to provide mobility of the rendering device, such as cellular (e.g., LTE) communications, Wi-Fi communications, and the like. The processor 101 may access information from, and store data in, the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is coupled to a haptic unit 107 configured to provide haptic feedback to the user (e.g.: vibrations), defined by the haptic effect described in the content 190. The haptic unit 107 may comprise a single haptic actuator or a plurality of haptic actuators located at a plurality of positions on the rendering device. Different haptic units may have a different number of actuators and/or the actuators may be positioned differently on the rendering device. A haptic unit may be integrated in the device or may be provided as a separate device. The haptic engine and rendering engine described below may be implemented by the processor 101, or by a separate processor (not depicted) or in separate devices.

In at least one embodiment, the processor 101 is configured to render a haptic signal according to embodiments described further below, in other words to apply a low-level signal to a haptic actuator to render a haptic effect. Such low-level signal may be represented using different forms, for example by metadata or parameters in the description file or by using a digital encoding of a sampled analog signal (e.g., PCM or LPCM).

The processor 101 may receive power from the power source 108 and may be configured to distribute and/or control the power to the other components in the device 100. The power source 108 may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated in an electronic package or chip. It will be appreciated that the rendering device 100 may include any subcombination of the elements described herein while remaining consistent with an embodiment. In addition, although the rendering device is presented as a standalone apparatus, it may also be implemented as a combination of different apparatuses. The processor 101 may further be coupled to other peripherals or units not depicted in figure 1 which may include one or more software and/or hardware modules that provide additional features, functionality and/or wired or wireless connectivity. For example, the peripherals may include sensors such as a universal serial bus (USB) port, a vibration device, a television transceiver, a hands-free headset, a Bluetooth® module, a frequency modulated (FM) radio unit, a digital music player, a media player, a video game player module, an Internet browser, and the like.

Typical examples of a rendering device 100 are smartphones, tablets, computers, game/AR/VR controllers, headphones, or any other object with integrated haptic capabilities able to render a haptic effect.

Other examples of rendering devices 100 do not comprise any haptic capabilities but are in relation with one or more device able to render a haptic effect such as haptic gloves, haptic chairs, haptic props, motion platforms. In this case, the rendering device 100 may prepare data for rendering the haptic effect so that another device, such as a haptic prop, can perform the haptic rendering. Examples of such devices are television sets, head-mounted displays, gamepads, or laptops.

In at least one embodiment, the device does not include a display unit, nor does it include a haptic unit. In such embodiment, the device does not visually render the content 190 and does not render the associated haptic effects. However, the device may prepare data for display so that another device, such as a screen, can perform the display and may prepare data for rendering the haptic effect so that another device, such as a haptic prop, can perform the haptic rendering. Examples of such devices are computers, game consoles, optical media players, or set-top boxes.

In at least one embodiment, the content 190 and associated elements are directly hosted in memory 106 of the rendering device 100 allowing local rendering and interactions. In a variant of this embodiment, the device 100 also comprises the content generator 110 allowing a fully standalone operation, for example without needing any communication network 170 and server 180.

**Figure 2** illustrates an example of spatialized audio workflow representing two audio sources and the audio listener. Indeed, the concept of spatialization had already been studied in the context of 3D audio signals. In interactive 3D audio systems, the audio pipeline is using 3 components: an audio Source, an audio listener and an audio mixer. An audio source component may generate sound based on a frequency, an amplitude and a duration chosen by the game designer or it may rely on existing (for example captured) sound files. For a spatialized audio, the sound is sent in the virtual environment in every direction according to a maximal distance since sound is propagated through the air. On the receiving side, an audio listener component can be considered as a sensor attach to a user. It captures the sound that can be heard from its position and orientation relative to the audio sources in the scene to render it on a playback device (E.g. speakers, headphones, etc.). A virtual environment can have several audio sources, one for each object producing sound. On the contrary, the audio listener is unique and is generally attached to the representation of the user in the experience. In the example of VR experiences, the audio listener will be attached to the location of the VR headset in the virtual environment. In the example illustrated in the figure, the audio listener is represented by an ear. The dotted circles represent the range of the sources. According to this example, the listener is in the range of the audio source A but not in the range of the audio source B, thus the audio listener will only render the sound played by the audio source A with some modifications based on the properties of the audio source (E.g.: adaptation of the sound volume based on the distance). The rendering of the sound of an audio source is done by modulating the audio signal according to a multitude of constraints, such as the distance between the source and the listener, or the user's relative speed with the audio source. The rendering of all the audio sources received by the listener is done through a mixing step.

While audio and haptic share some similarities, the audio spatialization system is not suitable for the specificity of haptic data and thus cannot be reproduced identically. First, the human body perceive sounds through the ears which can be represented using one audio listener for the whole body. Such system cannot be applied to haptic since haptic feedback can be perceived everywhere on the body, meaning that a large amount of haptic listener may be used to capture the haptic feedback playing in the scene. Each haptic listeners may be linked to different body location and different haptic devices, such as smartphones, controllers, haptic vest, haptic headphone or haptic seat.

Another difference between audio and haptic lies in the multitude of modalities haptic may convey, where audio is only limited to sound. Thus, haptic data may be thermal information, friction, force feedback, vibration, electric stimuli, and so on. It means that a haptic listener should capture a large variety of signal, each having its own properties of propagation and modulation. One additional difference between audio and haptic is the propagation of the signal. While audio mainly propagate through the air, haptic mainly propagate in material but also in the air. Therefore, the propagation (i.e. modification) of a signal depends on physical characteristics of the material itself. For example, a vibration will be able to propagate easily through a metal object but may be blocked by a softer material (E.g.: rubber, tissue, wood).

Many file formats exist for the description of 3D virtual environments. Most of these standards are proprietary and do not provide any solution for the support of haptics. To ease interoperability, the khronos group defined a standard file format for 3D scenes and models: glTF. This file format is based on JSON and can be extended through their extension system. While this file format does not provide any solution to support haptics, part of the MPEG-I standard (ISO/IEC 23090-14) proposes several extensions dedicated to interactivity and haptic support. These extensions can be used to attach haptic information to objects in the scene and trigger haptic rendering based on user interactions. The haptic information associated to objects in the scene may be defined either using textures or using the file format defined in ISO/IEC 23090-31 with either HJIF files or HMPG files (i.e. MIHS streams). The haptic support proposed in these extensions currently remains limited to simple haptic interactions and most of the work has to be carried out by the presentation engine (rendering engine). Haptic support relies on mostly two extensions: MPEG_Haptics and MPEG_haptic_material. The MPEG_haptic_material extension may be used to define the haptic properties of the surface of an object and MPEG_Haptics is used to define the overall haptic data associated to an object. The MPEG_haptic extension allows the support of haptic data as defined in ISO/IEC 23090-31. It is an independent haptic media like an audio content or an image. This extension may be attached at the glTF file level and stores the haptic data contained in the scene. The MPEG_haptic extension contains an array of haptic objects, as illustrated in Table 1.

Table 1

| Name | Type | Default | Description |
|---|---|---|---|
| hapticObjects | Array<MPEG_Haptics.hapticObject> | N/A | Provides a list of haptic elements at the glTF file level to enable haptic support |

The data for each element of the array is detailed in Table 2 that contains a list of accessors to medias in the MPEG_media extension.

Table 2

| Name | Type | Default | Description |
|---|---|---|---|
| accessors | array<integer> | N/A | Array of accessors to one or more media sources in MPEG_media.media array containing haptic media files. |

The data referenced by the accessors may be stored in dedicated Haptic buffers. The Haptic buffer format may correspond to the HMPG binary format detailed in ISO/IEC 23090-31.

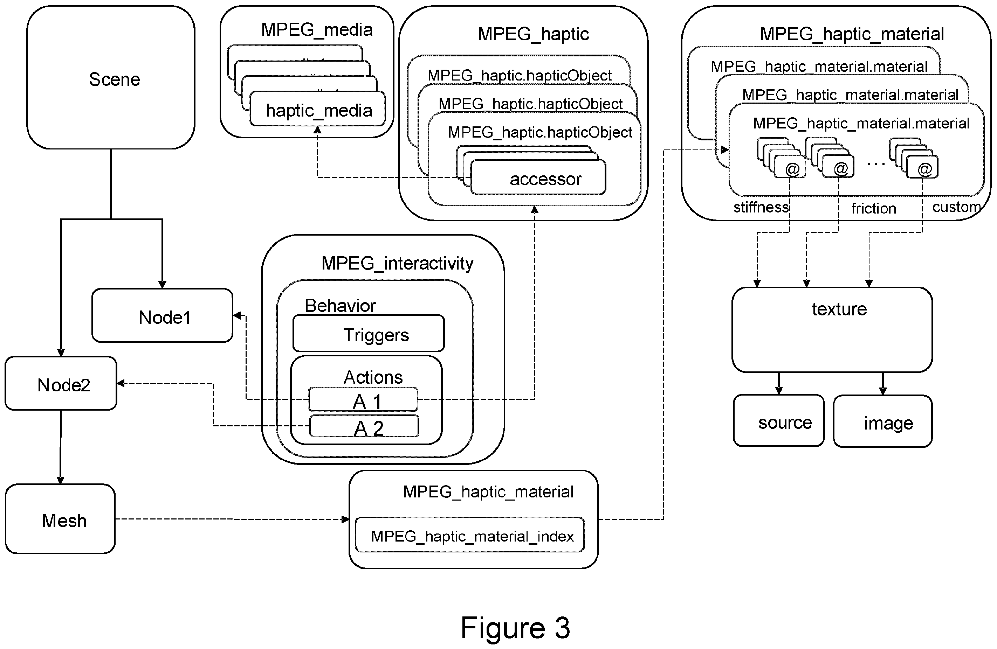

**Figure 3** provides a simplified example of a glTF scene combining the interactivity and haptics extensions. Haptic information may be stored at the glTF file level with the MPEG_haptic and MPEG_haptic_material extensions. The relation between a node in the scene and haptic data from the MPEG_haptic extension may be established in the MPEG_interactivity extension through haptic actions. Interactive haptic feedback may be produced by defining behaviors with triggers (e.g collisions, proximity, etc.) and haptic actions. For each node in a haptic action, the associated Haptic data may be defined either through a reference to an element of the MPEG_Haptic extension (action A1 and node1 in Figure G4.4-1) or through a MPEG_haptic_material attached to a mesh of the node (action A2 and node2 in Figure G4.4-1). When a haptic action is triggered, the associated haptic data shall be rendered according to the properties specified in the action. With this approach, haptic data is not associated directly to objects in the scene. Virtual haptic objects are defined in the haptic extension and associated to objects only through the interactivity extensions. This is particularly complicated and makes editing a haptic file very tedious.

With reference to the tables above and to figure 3, the term "haptic object" is defined by the file format standardization. However, the notion of haptic object presented above is different from the notion of haptic object presented below in the context of haptic spatialization although using the same term.

Embodiments described hereafter have been designed with the foregoing in mind and introduce the notion of haptic spatialization. This refers to the capability of an interactive system to compute and render complex haptic feedback based on 3D spatial information (i.e. position and orientation) of haptic sources (i.e., sources of haptic effects) and haptic listeners. A haptic listener can be interpreted as a virtual haptic sensor that captures the haptic data at a specific location in a virtual space that corresponds to the position of the haptic device relative to a user in the real world. Such interactive systems may be used in videogames, interactive cinema, or virtual reality (VR environments) for examples. The spatialization of haptic data is not trivial as it requires to not only handle the position and orientation of all haptic sources relative to each haptic listener in the environment, but it also needs to take into account the objects through which the haptic signal is propagated. While audio spatialization mostly focuses on the propagation of the sound through the air, haptic data may be propagated through a wide range of materials and therefore haptic spatialization depends on the physical properties of every object through which the haptic data is propagated.

Embodiments defined herein propose a system for haptic spatialization that considers the specificities of this media and relies on a haptic source (a virtual transmitter that is able to provide haptic information), a haptic object (an object with haptic properties, for example based on physical characteristics, to generate and/or modulate the propagation of a haptic signal through the object), and a haptic listener (a virtual sensor that capture haptic information). A haptic engine handles the workflow and interactions between these different elements of the system. More particularly, it determines how a haptic signal is propagated according to the spatial localization and the properties of the elements. Syntax elements describing the elements composing such system allow to create information representative of a scene comprising spatialized haptic effects. Such information can be provided to a rendering device in order to be played back accordingly.

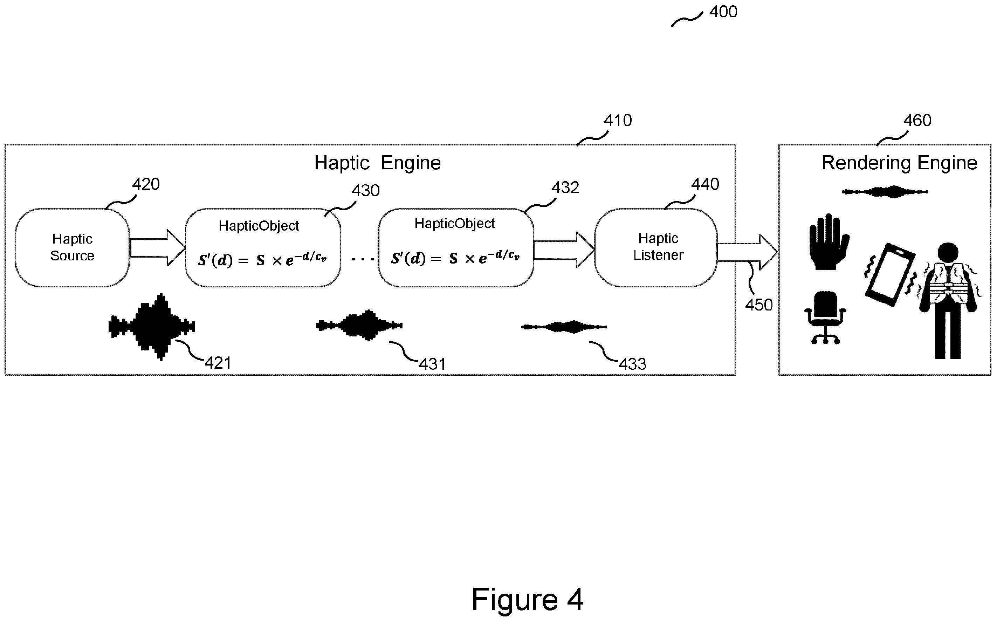

**Figure 4** illustrates an example of propagation of a haptic signal using the system for haptic spatialization according to embodiments. In this example, the system 400 comprises a haptic engine 410 and a rendering engine 450. The haptic engine 410 is in charge of determining (E.g., computing) the haptic signal transmitted to each haptic listener in the scene. It uses the geometric information of the scene to establish the relation between haptic listeners and haptic sources. If a haptic listener is linked to a haptic source through one or more haptic objects, the haptic engine uses the physical properties, and the propagation functions defined for each haptic object to modulate the haptic signal emitted by the haptic sources. If there are several haptic objects in between a source and listener, the haptic effect is propagated through each object starting from the source and the signal is therefore iteratively modulated. In the example of the figure, a single haptic source 420 provides a haptic signal 421. The haptic listener 440 is linked to the haptic source through the haptic objects 430 and 432. Based on the haptic properties of the haptic object 430, the haptic engine 410 determines the haptic signal 431 and then, based on the haptic properties of the haptic object 432, it determines the haptic signal 433 for the haptic listener 440. The haptic engine outputs the signal 450 captured by the listener to the rendering engine 460 that will play the haptic feedback on the devices. This example comprises a single haptic source so that the haptic signal 450 is identical to the signal 433. This is not the case in more complex situations using multiple haptic sources. When a haptic listener is associated with multiple haptic sources, the haptic engine may compute separately the modulated signals from the different haptic sources and either aggregate them (E.g., through a simple addition in the case of a same modality) or provide them separately to the rendering engine that will carry out the mixing or provide them to different haptic actuators. Indeed, multiple actuators rendering different modalities (E.g., vibration, temperature, pressure) may be needed to render the data received from the haptic engine. When there are several haptic listeners in the scene, the same operation has to be carried out independently for each haptic listener.

A haptic object represents a virtual object with haptic properties. It is used to modulate and transfer haptic information based on its haptic properties (i.e. physical properties) that comprise parameters such as the list of haptic modalities that the object can transmit, gain factor, roughness, density, elasticity, thermal conductivity or vibrotactile conductivity for example. A non-exhaustive list is proposed in Table 4 below. Other properties may be added to the system to allow other types of modulation of the signal or address additional haptic modalities. In addition to these properties the haptic object is also associated with a spatial localization that provides a position and orientation of the haptic object within a haptic scene.

The haptic object may also specify how to use these properties to modulate the input haptic signal based on the propagation distance, time or other variables. The propagation function may be specified in different manners. A first solution consists in using URNs, where each URN would uniquely identify a propagation function. For instance a URN urn:haptic-propagation:VibrationExponentialAttenuation could be defined with the following formula:

$$S'(d) = S \times e^{-d/c_v} \tag{1}$$

where S is the input signal, $S'$ is the modulated signal, d is the propagation distance and $c_v$ is the vibrotactile conductivity. The input signal can then be modulated by the renderer using this formula to output an attenuation function. This solution requires that the rendering engine has implemented the function specified in the URN. A second solution is to allow users to define their own custom functions directly into the object. This solution is more flexible and could be integrated using a simple string. This solution requires to precisely specify how to interpret the function. This could be done by relying on regular expressions to constrain the custom function and ensure it can be interpreted by the rendering engine. Specific keywords identifying the input, output, parameters and variables must be defined and the mathematical symbols and formulation of the function must be known and standard (based on ISO-80000-2:2019 for instance) so that any engine can interpret it. Equation (1) could be used directly as a custom function. The renderer would then have to interpret the function first to be able to render it.

Although the haptic objects allow to establish a relation (E.g., a link) between the different elements (for example between one haptic source and one haptic listener, or between one haptic source and another haptic object, or between one haptic object and a haptic listener), this relation is not explicitly defined by syntax elements. It is the haptic engine that determines if a relation exists based on the geometry of the scene (i.e. position, orientation and shape of all the objects in the scene). For each listener in the scene the haptic engine identifies every source in direct relation or indirect relation (i.e. through one or multiple haptic objects) with the listener and modulates the haptic signals based on the characteristics of the haptic objects through which it was propagated. For example, in the situation where a user is resting his hands on a table and a falling object impacts the table in proximity of the right hand, the haptic engine will determine that the hands are linked to the object through the table. A vibration may be felt in both hands depending on the characteristics of the table. If the impact is strong, both hands are close and the table is metallic, the impact should be conveyed to both hands and a strong vibration may be provided to both hands as there is a link between the haptic source (the impact) and the haptic listeners (right hand and left hand). If the hands are far apart and the table is made of wood, both hands may receive a vibration, but the intensity of the vibrations received by the left hand will be weaker as it is further away from the source. If another character is standing in the same room but does not touch the table, there will be no link between the haptic source of the impact and this character since their respective geometric parameters do not share a contact point.

Specific haptic object can be defined such as the "Air". It can be defined as a haptic object that may receive and sent haptic information by emission into the space. The air can transmit haptic information according to a distance, an angle and other parameters.

A haptic source represents an element of the virtual scene that emits a haptic signal. A haptic source may be an element of the scene that only transmit its own haptic data, but it may also be at the same time a haptic object that propagates haptic data coming from other sources. The haptic data of the source may be defined using a parametric representation or it may be stored using haptic medias. A haptic source may be placed in the virtual environment by a designer or created at runtime based on an interaction or an event. The haptic source may for instance be created following the collision of two haptic objects. The haptic source is also associated with a spatial localization that provides a position and orientation of the haptic object within a haptic scene.

A haptic source may define multiple haptic effects. For instance, the engine of a car may be associated to both vibration data and temperature data. This information could be stored in a single file or split into separate haptic medias. The haptic source handles and transmit the data of all its associated haptic effects.

A haptic effect may be composed of one or several signals (potentially with multiple channels). It may define haptic data for a vibration signal, a temperature, a movement or any other haptic modality. It may be defined with a parametric representation (e.g. similar to the JSON parametric representation proposed in the HJIF format for instance) or simply with a reference to a media file containing the haptic data (such as a HJIF file, a HMPG file, a WAV file, or any other haptic file). The effect may also specify information on how and when to play the haptic data. For instance, it may indicate a range (i.e. maximum distance), whether or not the effect should be repeated and the frequency at which it should be repeated, an intensity gain or the spatial density (i.e. how localized is the effect). It may also constrain the direction and shape of the emission (e.g. sphere, cone cylinder). Table 7 and Table 8 propose a non-exhaustive list of parameters that a haptic media may define to characterize the haptic source. A Haptic Effect may have different states. It could be activated or not. If the haptic effect is activated and playing, the haptic source emits the associated haptic signal that can then be propagated through haptic objects.

A haptic listener represents a virtual sensor capturing haptic information received from haptic sources in the scene. It may be a haptic object that can transmit haptic information, or it may be an element of the scene that only receives haptic data. It is typically associated with a haptic rendering device in the real world. It can be used to capture all the haptic data, but it may also be restricted to specific haptic modalities or limited to specific ranges (in terms of amplitude or frequency for instance). Table 11 provides a non-exhaustive list of properties that may be used to characterize a haptic listener. The haptic source is also associated with a spatial localization that provides a position and orientation of the haptic object within a haptic scene.

The system for haptic spatialization presented herein may be implemented as an extension to the MPEG-I Scene description specification (ISO/IEC 23090-14 amd 2). The MPEG_Haptic extension as defined in the specification may be updated to support the embodiments for haptic spatialization. Indeed, the haptic extension currently only allows to attach haptic data indirectly to objects in the scene through the interactivity extension as illustrated in Figure 3. Embodiments propose to define the key components required for spatialized haptics directly in the MPEG_haptic extension.

Table 3 describes the semantic of the MPEG_haptic extension at the node level.

Table 3

| Name | Type | Default | Description | Required |
|---|---|---|---|---|
| hapticObjects | Array<MPEG_Haptics.hapticObject> | N/A | Provides a list of haptic Objects at the gITF file level to enable haptic support | Yes |
| hapticSources | Array<MPEG_Haptics.hapticSource> | N/A | Provides a list of haptic sources at the gITF file level to enable haptic support | Yes |
| hapticListeners | Array<MPEG_Haptics.hapticListener> | N/A | Provides a list of haptic listeners at the gITF file level to enable haptic support | Yes |

Table 4 describes the semantic of haptic objects.

Table 4

| Name | Type | Default | Description | Required |
|---|---|---|---|---|
| hapticModalities | array<Enumeration> | N/A | List of haptic modalities that can be propagated through the object. Possible values are described in Table 5. An empty list means that all modalities may be transmitted. | Yes |
| gainFactor | number | 1 | Gain for the haptic effect | No |
| roughness | number | 1 | Coefficient of roughness | No |
| density | number | 1 | Coefficient of density | No |
| elasticity | number | 1 | Coefficient of elasiticity | No |
| thermalConductivity | number | 1 | Coefficient of conductivity for thermal information | No |
| vibrotactileConductivity | number | 1 | Coefficient of conductivity for vibrotactile information | No |
| propagationFunctions | array<PropagationFunction> | N/A | List of propagation functions to use for the different supported haptic modalities. If no propagation function is specified for a haptic modality, the haptic signal is transmitted without any modification (i.e. the propagation function is the identity) | Yes |

Table 5 describes the supported haptic modalities.

Table 5

| |
|---|
| Pressure = 0 |
| Acceleration |
| Velocity |
| Position |
| Temperature |
| Vibrotactile |
| Water |
| Wind |
| Force |
| Electrotactile |
| Vibrotactile Texture |
| Stiffness |
| Friction |
| Other |

Table 6 describes the semantic defining how the propagation function is detailed.

Table 6

| Name | Type | Default value | Description | Required |
|---|---|---|---|---|
| hapticModality | Enumeration | N/A | Haptic modality for which the propagation function is defined. Possible values are described in Table 5 | Yes |
| function | string | um:haptic-propagation :identity | Function is a URN uniquely identifying what propagation function to use. For each URN, proper formulas shall be provided indicating what are the parameters (i.e. distance, time, ...) and how to use the haptic object properties. | No |
| customFunction | string | "S'=S" | Custom function defining how a haptic signal is modulated based on the specified parameter. | No |

Table 7 details the semantic of a haptic source. A source is simply characterized by a list of haptic effects. The semantic of haptic effects is detailed in Table 8. In the context of MPEG, the haptic data associated to a haptic effect is stored in the MPEG_media. media array and can be referenced through glTF accessors.

Table 7

| Name | Type | Default | Description | Required |
|---|---|---|---|---|
| hapticEffects | Array<HapticEffect> | N/A | List of haptic medias associated to a source | Yes |

Table 8

| Name | Type | Default | Description | Required |
|---|---|---|---|---|
| hapticEffect | accessor | N/A | Accessor to a media source in MPEG_media.media array containing haptic media files. | Yes |
| mediaState | enumeration | "Disabled" | State of the haptic media. Possible values are detailed in Table 9 | No |

(continued)

| Name | Type | Default | Description | Required |
|---|---|---|---|---|
| spatialDensity | number | 0 | Default spatial density of the haptic effect around the location. It indicates a radius of propagation of an effect around a point of contact. | No |
| effectType | enumeration | Punctual | Type of haptic effect. Possible values are "Punctual" for effects that occur only once and "Repetitive" for effects that should repeated over time. | No |
| effectRate | number | 0 | Time before replaying a repetitive effect in seconds. Not used if it's a continuous effect. | No |
| maxDistance | number | 10 | Refer to the maximum distance of propagation of the haptic information into space or the haptic object. In meters. | No |
| emissionShape | Enumeration | Sphere | Emission shape of the haptic effect. Possible values are specified in Table 10. | No |

Table 9 describes the supported emission shapes for a haptic signal.

Table 9

| |
|---|
| Disabled |
| Playing |
| Pause |

Table 10 describes the supported emission shapes for a haptic signal.

Table 10

| |
|---|
| Sphere |
| Cone |
| Box |
| |

Table 11 describes the properties of a haptic listeners.

Table 11

| Name | Type | Default | Description | Required |
|---|---|---|---|---|
| hapticModality | Array<enumeration> | N/A | List of haptic modalities that can be captured by the listener. Possible values are described in Table 5. An empty list means that all modalities are captured by the listener. | Yes |
| MaximumFrequency | number | 2000 | Maximum frequency that the listener can capture. | No |
| MinimumFrequency | number | 0 | Minimum frequency that the listener can capture. | No |
| MaximumVibrationAmplitude | number | 1 | Maximum vibration amplitude that the listener can capture. | No |
| Minimum VibrationAmplitude | number | -1 | Minimum vibration amplitude that the listener can capture. | No |

(continued)

| Name | Type | Default | Description | Required |
|------|------|---------|-------------|----------|
| MaximumTemperature | number | 100 | Maximum temperature that the listener can capture. | No |
| Minimum Temperature | number | -10 | Minimum temperature that the listener can capture. | No |
| MaximumForce | number | 100 | Maximum force that the listener can capture. | No |
| MinimumForce | number | 0 | Minimum force that the listener can capture. | No |
| MaximumIntensity | number | 10 | Maximum intensity that the listener can capture. | No |
| MinimumIntensity | number | 0 | Minimum intensity that the listener can capture. | No |
| MaximumVoltage | number | 12 | Maximum Voltage that the listener can capture. | No |
| MinimumVoltage | number | 0 | Minimum Voltage that the listener can capture. | No |

To implement the proposal in an optimal fashion it is proposed to define the MPEG_haptic extension at the node level as well. Instead of relying on the interactivity extension to map haptic information to nodes of the scene, the haptic data of an object may be directly attached to a node. The semantic of the MPEG_haptic extension at the node level is detailed in Table 12.

Table 12

| Name | Type | Default | Description | Required |
|------|------|---------|-------------|----------|
| hapticObjectIndex | Integer | N/A | Reference to an item in the hapticObject array of the MPEG_haptic extension defined at glTF file level | No |
| hapticSourceIndex | Integer | N/A | Reference to an item in the hapticSource array of the MPEG_haptic extension defined at glTF file level | No |
| hapticListenerIndex | Integer | N/A | Reference to an item in the hapticListener array of the MPEG_haptic extension defined at glTF file level | No |

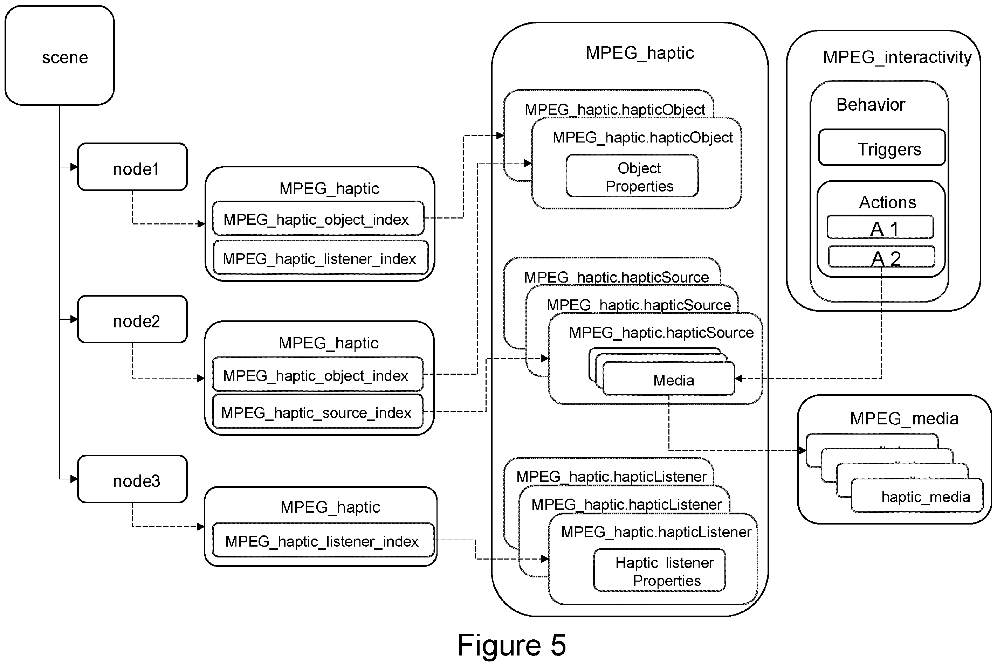

**Figure 5** illustrates an example of a haptic spatialization gltf scene according to embodiments. All haptic objects, haptic sources and haptic listeners are defined with the MPEG_haptic extension at the glTF file level. Since these objects are associated to nodes of the scene, their spatial localization is determined by the spatial coordinates of the nodes. Objects in the scene can then be associated with haptic objects, haptic sources and/or haptic listeners. This solution allows to optimize data storage. If an object in the scene is duplicated many times the haptic data itself is defined only once at the top level and is only referenced at the node level.

The principles described above are hereunder further described using an example use case. In this example a user is equipped with a haptic chair that can be used to render vibrotactile feedback as well as temperature feedback (with fans for instance). The user experiences a car simulation where the engine (an internal combustion engine) of the car can be turned on and off. In the real world, starting an internal combustion engine may result in vibrations due to the movements of the engine and an elevation of the temperature due to heat exchange induced by the internal combustion. In a simulation, the user's experience may be enhanced by simulating these real effects.

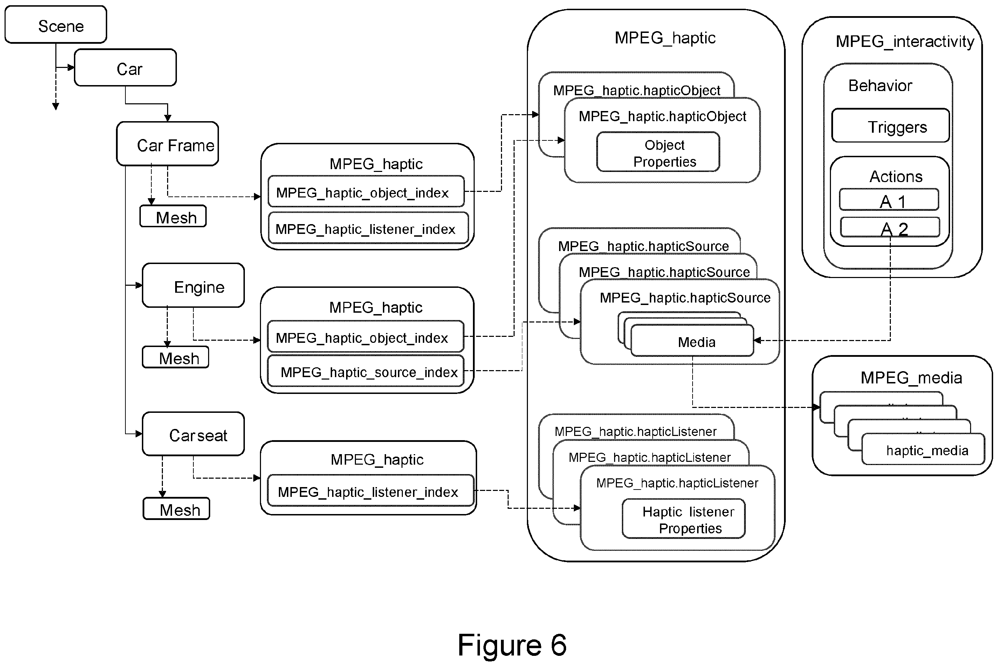

**Figure 6** illustrates an example of haptic spatialization gltf scene representing a car simulation experience according to embodiments. The scene contains a *car* syntax element comprising a *car frame* syntax element in relation with an *engine* syntax element and a *car seat* syntax element. The engine is associated to a haptic source with two effects: a vibration media and a temperature media. The car frame is a haptic object that can propagate haptic data based on its haptic properties. The car seat is used as a haptic listener that will capture haptic signals from the scene. The presentation/rendering engine will map this listener to the haptic device used for the rendering. In this case, the mapping is straightforward as the haptic device is a chair. The interaction of the user with this car simulator is handled by the MPEG_interactivity extension that will start the engine and turn it off. The interactivity extension enables and disables the haptic effects of the haptic source associated to the motor. In this example it will trigger both vibrotactile and temperature feedback to simulate both the vibration and the heat generated by the engine and transmitted to the seat through the car frame.

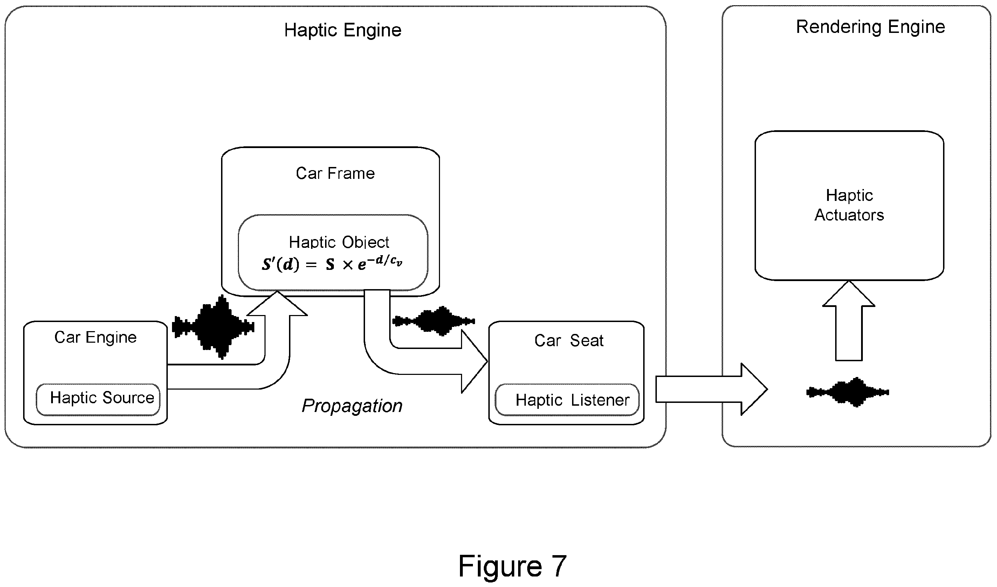

**Figure 7** illustrates an example of pipeline for rendering the haptic spatialization gltf scene representing a car simulation experience according to embodiments. Based on the scene description data represented by figure 6, the haptic engine first analyses the scene to establish the relation between haptic listeners and haptic sources. This may be done using the scene tree and/or the mesh associated to the nodes. In our example, the haptic engine establishes that the car seat (which is a haptic listener) is linked to the engine (which is a haptic source) through the car frame (which is a haptic object) based on the geometry of the scene (). Using the haptic properties of the car frame, it will then propagate and modulate the signal coming from the engine. For example, if the haptic object uses the equation (1) for the propagation of the vibration, and with the hypothesis that the motor is 1 meter away from the seat in the car frame, the signal S' captured by the haptic listener of the seat can be computed with the formula:

$$S' = S \times e^{-1/c_v}$$

where S is the signal of the vibration effect from the haptic source of the motor and $c_v$ the vibrotactile conductivity of the car frame.

Regarding the simulation of the heat, since the thermal conductivity of the car frame is low, no thermal information will be transmitted to the chair. If the heating system was added to the simulation, it could be introduced as a haptic object transmitting the temperature of the engine to a node representing the air. The thermal data could then be transmitted from the motor to the seat and eventually rendered using fans.

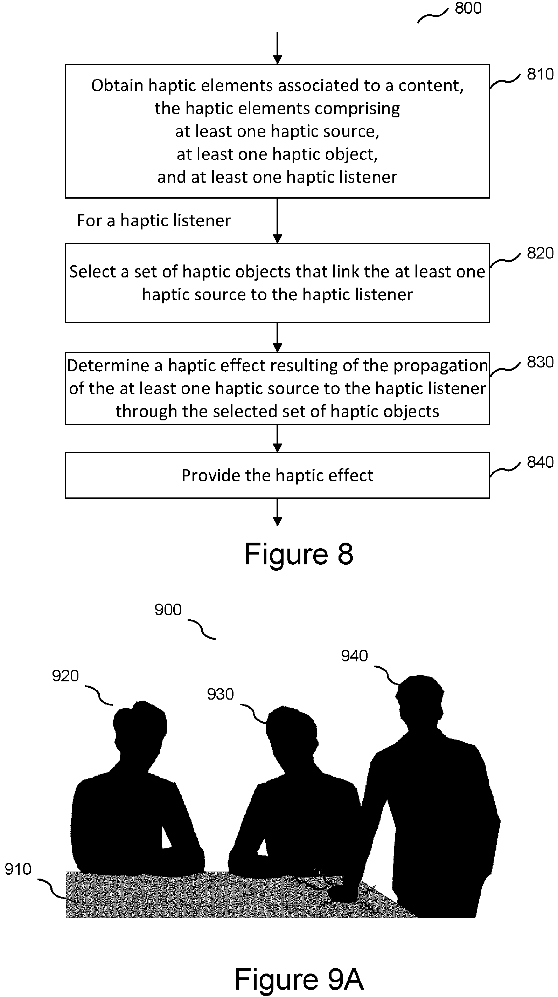

**Figure 8** illustrates an example of method for decoding information representative of spatialized haptic effects according to embodiments. This process 800 is for example implemented in a rendering device 100 of figure 1 and typically executed by the processor 101 of such device. The input of this process is a data file or stream based on the syntax elements described in the tables introduced above.

In step 810, the processor obtains haptic elements associated to a content, the haptic elements comprising at least one haptic source, at least one haptic object, and at least one haptic listener. These elements are packaged according to the syntax elements described in the tables introduced above.

In step 820, for a haptic listener, the processor selects a set of haptic objects that link the at least one haptic source to the haptic listener. This is for example done based on the spatial localization of the haptic sources, the spatial localization of the haptic listener, the spatial localization of the haptic objects and the propagation characteristics of the haptic objects. The shape of the objects may also be taken into account.

In step 830, the processor determines a haptic effect resulting of the propagation of the at least one haptic source to the haptic listener through the selected set of haptic objects. This step may comprise the combination of different haptic signals propagated from different haptic sources through different haptic objects.

In step 840, the processor provides the haptic effect, for example to a haptic rendering engine.

In at least one implementation of the process 800, a haptic source generates a haptic signal, a haptic listener captures the haptic signal as propagated from the haptic source through at least one haptic object. In at least one implementation of the process 800, the set of haptic objects are selected based on geometric information comprising the spatial localization and shape of the haptic sources, the spatial localization and shape of the haptic listener, the spatial localization and shape of the haptic objects and the propagation characteristics of the haptic objects. In at least one implementation of the process 800, a haptic object is associated with a propagation function.

In at least one embodiment, establishing that two haptic elements are linked is done by determining if the haptic elements share at least one contact point or contact surface. When two haptic elements share a contact point or contact surface, it is considered that they are linked, and such objects may be selected in step 820. When two haptic elements do not share a contact point or contact surface, it is considered that they are not linked and thus cannot be selected in step 820.

In another implementation, if applying the propagation characteristics of the haptic objects to the haptic sources result in the existence of a haptic signal, then such haptic object is added to the set. If no haptic signal is remaining after the propagation through a haptic object, then this haptic object is not added to the set.

Another example use case is hereunder described. In this example two users are participating to an immersive virtual experience where they are sitting at a table with their hands on the table and a third user is standing in the virtual scene (for a virtual visio-conference meeting where people are remotely attending for instance). The users are equipped with a haptic vest that can be used to render vibrotactile feedback. The third user is hitting the virtual the table with his fist which triggers the creation and rendering of a haptic effect.

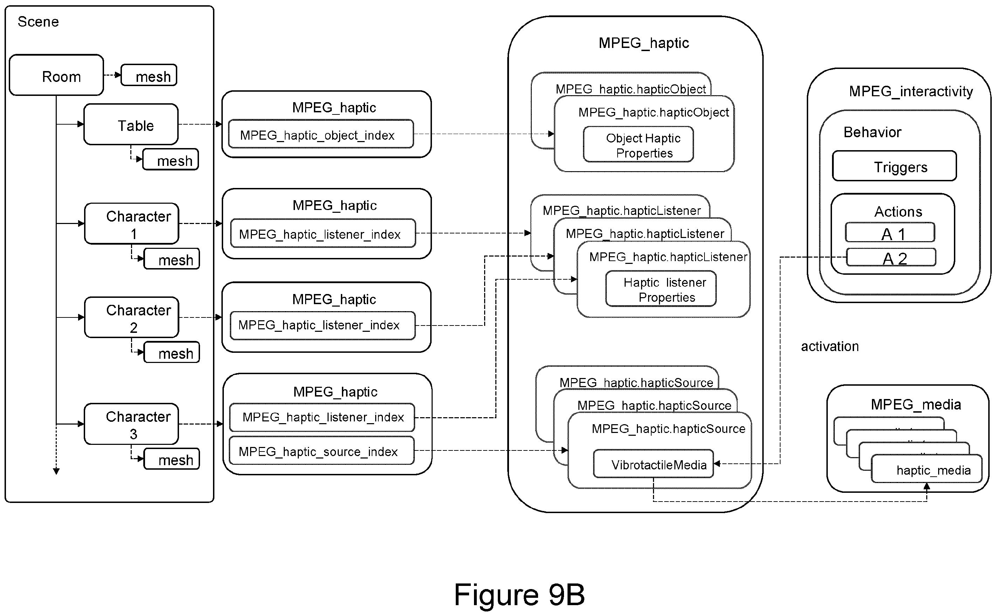

**Figure 9A** illustrates an example of haptic spatialization gltf scene representing a virtual meeting experience according to embodiments. **Figure 9B** illustrates an example of syntax of the haptic spatialization gltf scene of figure 9A according to embodiments. The scene contains a *room* syntax element comprising a *table* syntax element in relation with a *character* 1 syntax element, a *character* 2 syntax element and a *character* 3 syntax element. The character 3 is associated to a haptic source with a vibration effect created upon impact with the table by the interactivity engine. The table is a haptic object that can propagate haptic data based on its haptic properties. The character 1 and character 2 are associated with a haptic listener that will capture haptic signals from the scene. The presentation/rendering engine will map this listener to the haptic device used for the rendering. The interaction of the users in the scene is handled by the MPEG_interactivity extension that will create, enable and/or disable the haptic effects based on user interactions with the environment.

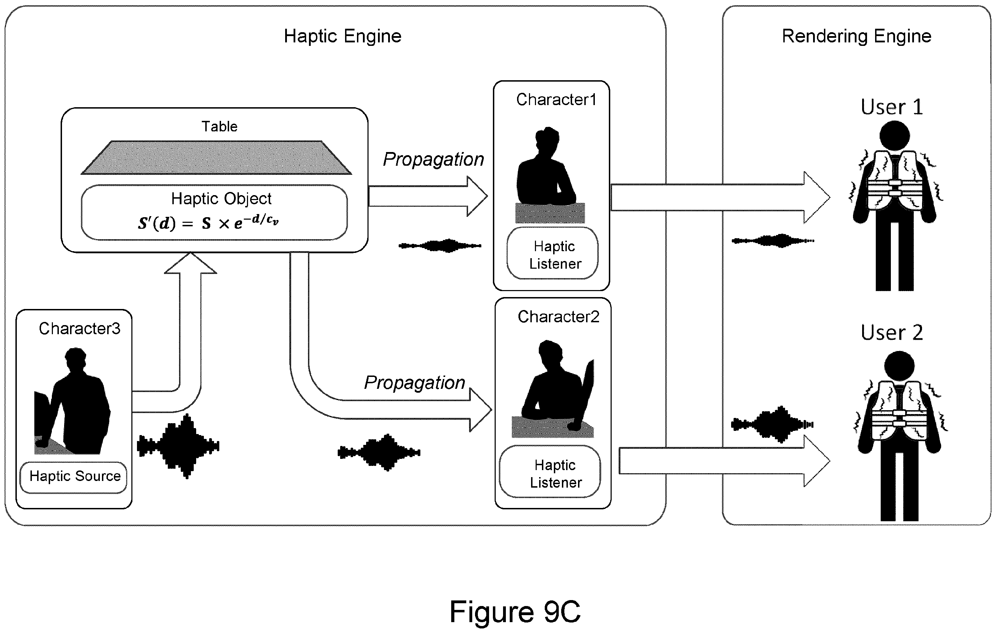

**Figure 9C** illustrates an example of pipeline for rendering the haptic spatialization gltf scene of figure 9A according to embodiments. Based on the scene description data represented by figure 9B, the haptic engine first analyses the scene to establish the relation between haptic listeners and haptic sources. This may be done using the scene tree and/or the mesh associated to the nodes. In our example, the haptic engine establishes that the character 1 and character 2 (which are haptic listeners) are linked to the character 3 (which is a haptic source) through the table (which is a haptic object). Using the haptic properties of the table, it will then propagate and modulate the signal coming from the character 3. For example, if the haptic object uses the equation (1) for the propagation of the vibration, the signal received by character 1 will be weaker than the one received by character 2 as he is sitting at a greater distance from the location of the impact of the fist of character 3 with the table.

Although different embodiments have been described separately, any combination of the embodiments together can be done while respecting the principles of the disclosure.

Although embodiments are related to haptic effects, the person skilled in the art will appreciate that the same principles could apply to other effects such as the sensorial effects for example and thus would comprise smell, taste, temperature, emotions, intensity highlights, etc. Appropriate syntax would thus determine the appropriate parameters related to these effects.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Additionally, this application or its claims may refer to "obtaining" various pieces of information. Obtaining is, as with "accessing", intended to be a broad term. Obtaining the information may include one or more of, for example, receiving the information, accessing the information, or retrieving the information (for example, from memory or optical media storage). Further, "obtaining" is typically involved, in one way or another, during operations such as, for example, storing the information, processing the information, transmitting the information, moving the information, copying the information, erasing the information, calculating the information, determining the information, predicting the information, or estimating the information. This application or its claims may refer to "device" or "apparatus" interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

**Claims**

1. A method comprising:

　　　obtaining haptic elements associated to a content, the haptic elements comprising at least one haptic source, at least one haptic object, and at least one haptic listener,
　　　for a haptic listener, selecting a set of haptic objects that allows to establish a link between the at least one haptic source and the haptic listener,
　　　determining a haptic effect resulting of propagation of the at least one haptic source to the haptic listener through the selected set of haptic objects; and

providing the haptic effect to a haptic rendering engine,

wherein the haptic elements are associated with a spatial localization within a scene.

2. The method of claim 1, wherein a haptic source generates a haptic signal, a haptic listener captures the haptic signal as propagated from the haptic source through at least one haptic object.

3. The method of any of claim 1 or 2, wherein the set of haptic objects are selected based on geometric information comprising the spatial localization and shape of the haptic sources, the spatial localization and shape of the haptic listeners, the spatial localization and shape of the haptic objects and propagation characteristics of the haptic objects.

4. The method of any of claim 1 to 3, wherein a haptic object is associated with a propagation function.

5. An apparatus comprising a processor configured to:

obtain haptic elements associated to a content, the haptic elements comprising at least one haptic source, at least one haptic object, and at least one haptic listener,
for a haptic listener, select a set of haptic objects that allows to establish a link between the at least one haptic source and the haptic listener,
determine a haptic effect resulting of propagation of the at least one haptic source to the haptic listener through the selected set of haptic objects; and
provide the haptic effect to a haptic rendering engine,

wherein the haptic elements are associated with a spatial localization within a scene.

6. The apparatus of claim 5, wherein a haptic source generates a haptic signal, a haptic listener captures the haptic signal as propagated from the haptic source through at least one haptic object.

7. The apparatus of any of claim 5 or 6, wherein the set of haptic objects are selected based on geometric information comprising the spatial localization and shape of the haptic sources, the spatial localization and shape of the haptic listeners, the spatial localization and shape of the haptic objects and propagation characteristics of the haptic objects.

8. The apparatus of any of claim 5 to 7, wherein a haptic object is associated with a propagation function.

9. A non-transitory computer readable medium comprising data elements for describing at least one haptic scene, the data elements comprising at least one haptic source, at least one haptic object, and at least one haptic listener, wherein a haptic source generates a haptic signal, a haptic listener captures the haptic signal as propagated from the haptic source through at least one haptic object and wherein haptic sources, haptic objects, haptic listeners are associated with spatial localizations within the haptic scene.

10. A computer program comprising program code instructions for implementing the method according to any of claims 1 to 4 when executed by a processor.

11. A non-transitory computer readable medium comprising program code instructions for implementing the method according to any of claims 1 to 4 when executed by a processor.

Figure 1

Figure 2

Figure 3

EP 4 778 604 A1

Figure 4

EP 4 778 604 A1

Figure 5

Figure 6

EP 4 778 604 A1

**Rendering Engine**

Haptic Actuators

**Haptic Engine**

Car Frame

Haptic Object
$$S'(d) = S \times e^{-d/c_v}$$

Car Seat

Haptic Listener

Car Engine

Haptic Source

*Propagation*

Figure 7

~ 800

```
                         ┌──────────────────────────────────────┐
                         │  Obtain haptic elements associated to a content,  │ ~ 810
                         │        the haptic elements comprising           │
                         │          at least one haptic source,            │
                         │          at least one haptic object,            │
                         │       and at least one haptic listener          │
                         └──────────────────────────────────────┘
```

For a haptic listener

```
                         ┌──────────────────────────────────────┐
                         │ Select a set of haptic objects that link the at least one │ ~ 820
                         │        haptic source to the haptic listener      │
                         └──────────────────────────────────────┘
```

```
                         ┌──────────────────────────────────────┐
                         │ Determine a haptic effect resulting of the propagation │ ~ 830
                         │ of the at least one haptic source to the haptic listener │
                         │      through the selected set of haptic objects    │
                         └──────────────────────────────────────┘
```

```
                         ┌──────────────────────────────────────┐
                         │            Provide the haptic effect              │ ~ 840
                         └──────────────────────────────────────┘
```

# Figure 8

900

940

920

930

910

# Figure 9A

Figure 9B

EP 4 778 604 A1

Figure 9C

Europäisches
Patentamt

European
Patent Office

Office européen
des brevets

# EUROPEAN SEARCH REPORT

**Application Number**

EP 25 30 5067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2018/161671 A1 (HEUBEL ROBERT W [US])<br>14 June 2018 (2018-06-14)<br>* paragraph [0066]; claim 8; figures 5,6,7 * | 1-3,5-7,<br>9-11<br>4,8 | INV.<br>A63F13/285<br>G06F3/01 |
| A | US 11 086 403 B2 (IMMERSION CORP [US])<br>10 August 2021 (2021-08-10)<br>* claim 1 * | 1 | |
| A | US 2018/200619 A1 (GUILLOTEL PHILIPPE [FR]<br>ET AL) 19 July 2018 (2018-07-19)<br>* paragraph [0076]; figure 7 * | 3,7 | |
| A | US 2019/121432 A1 (KROGSTAD DUSTIN JEFFERY<br>GORDON [US] ET AL)<br>25 April 2019 (2019-04-25)<br>* paragraph [0067]; figure 7 * | 4,8 | |
| A | US 2023/333655 A1 (CAVALCANTE DE ALMEIDA<br>CARLOS FELIPE [CA] ET AL)<br>19 October 2023 (2023-10-19)<br>* claim 1 * | 1,5,9-11 | |
| | | | **TECHNICAL FIELDS SEARCHED (IPC)**<br><br>A63F<br>G06F |

The present search report has been drawn up for all claims

| Place of search | Date of completion of the search | Examiner |
|---|---|---|
| Munich | 7 March 2025 | Halbhuber, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

# EP 4 778 604 A1

## ANNEX TO THE EUROPEAN SEARCH REPORT
## ON EUROPEAN PATENT APPLICATION NO.

EP 25 30 5067

07-03-2025

| Patent document cited in search report | Publication date | Patent family member(s) | | Publication date |
|---|---|---|---|---|
| US 2018161671 A1 | 14-06-2018 | CN | 108170262 A | 15-06-2018 |
| | | EP | 3333672 A1 | 13-06-2018 |
| | | JP | 2018097850 A | 21-06-2018 |
| | | JP | 2020161164 A | 01-10-2020 |
| | | KR | 20180065874 A | 18-06-2018 |
| | | US | 2018161671 A1 | 14-06-2018 |
| | | US | 2020023272 A1 | 23-01-2020 |
| US 11086403 B2 | 10-08-2021 | CN | 110389660 A | 29-10-2019 |
| | | EP | 3567455 A2 | 13-11-2019 |
| | | JP | 2019200783 A | 21-11-2019 |
| | | KR | 20190122581 A | 30-10-2019 |
| | | US | 2019324541 A1 | 24-10-2019 |
| | | US | 2020257367 A1 | 13-08-2020 |
| US 2018200619 A1 | 19-07-2018 | BR | 112018000796 A2 | 04-09-2018 |
| | | CA | 2992128 A1 | 19-01-2017 |
| | | CN | 107835971 A | 23-03-2018 |
| | | EP | 3118723 A1 | 18-01-2017 |
| | | EP | 3323032 A1 | 23-05-2018 |
| | | JP | 2018527655 A | 20-09-2018 |
| | | KR | 20180030515 A | 23-03-2018 |
| | | RU | 2018105082 A | 13-08-2019 |
| | | US | 2018200619 A1 | 19-07-2018 |
| | | WO | 2017009181 A1 | 19-01-2017 |
| US 2019121432 A1 | 25-04-2019 | CN | 109683702 A | 26-04-2019 |
| | | US | 2019121432 A1 | 25-04-2019 |
| US 2023333655 A1 | 19-10-2023 | US | 11775072 B1 | 03-10-2023 |
| | | WO | 2023200666 A1 | 19-10-2023 |

EPO FORM P0459

For more details about this annex : see Official Journal of the European Patent Office, No. 12/82